# FASCICULE DE BREVET EUROPEEN

(11) **EP 4 019 107 B1**
(45) Date de publication et mention de la délivrance du brevet: **06.11.2024**
(21) Numéro de dépôt: 21216179.8
(22) Date de dépôt: 20.12.2021
(51) Int. Cl.: B01D 19/00, F24D 19/08

(54) **DISPOSITIF SÉPARATEUR DE SÉCURITÉ POUR UNE INSTALLATION DE TRANSFERT D'ÉNERGIE**
SICHERHEITSTRENNVORRICHTUNG FÜR EINE ENERGIEÜBERTRAGUNGSANLAGE
SAFETY SEPARATOR DEVICE FOR AN INSTALLATION FOR TRANSFERRING ENERGY

(30) Priorité: 23.12.2020 FR 2014036
(43) Date de publication de la demande: 29.06.2022
(73) Titulaire: Société Industrielle de Chauffage (SIC), 59660 Merville (FR)
(72) Inventeur: SAISSET, Luc, 38460 Villemoirieu (FR); ANTOINE, Emmanuel, 59270 Bailleul (FR)
(74) Mandataire: Ipsilon

(56) Documents cités:
- FR-A1- 2 474 133
- FR-A1- 3 090 083
- FR-A1- 3 095 836
- US-A1- 2010 326 130

## Description

La présente invention concerne le domaine des installations de transfert d'énergie.

En particulier, la présente invention concerne les installations de transfert d'énergie utilisant un fluide frigorigène. Plus particulièrement, l'invention concerne un dispositif séparateur de sécurité pour une installation de transfert d'énergie. Un exemple d'un module hydraulique est divulgué dans FR3090083.

Ces installations de transfert d'énergie sont des installations comprenant un appareil dont le fonctionnement repose sur une boucle thermodynamique utilisant le fluide frigorigène comme fluide de travail. Ces installations sont par exemple des installations de chauffage ou de climatisation de locaux ou encore des installations de chauffage d'eau sanitaire.

De manière usuelle, la boucle thermodynamique de cet appareil comprend un compresseur relié à un condenseur lui-même relié à un détendeur, lui- même relié à un évaporateur, qui est relié au compresseur, ce qui ferme la boucle thermodynamique. Dans cette boucle, circule le fluide frigorigène qui est mis en mouvement et comprimé dans le compresseur, puis subit une condensation dans le condenseur avant d'être détendu dans le détendeur et enfin subit une évaporation dans l'évaporateur. L'évaporateur et le condenseur sont des échangeurs de chaleur, dans chacun desquels le fluide frigorigène échange partiellement son énergie thermique avec un autre fluide. L'évaporateur permet un échange de chaleur entre le fluide frigorigène et une source d'énergie. Cette source d'énergie est par exemple de l'air extérieur dans une pompe à chaleur dite « air/eau ».

Ces appareils intégrant une boucle thermodynamique peuvent être installés sous forme monobloc, i.e. avec la totalité de la boucle thermodynamique qui est disposée hors du bâtiment ou à l'intérieur d'un local technique de ce bâtiment, ou de manière séparée (appelée « split »), i.e. une première partie de la boucle thermodynamique est disposée à l'intérieur de la partie habitée du bâtiment et une deuxième partie de la boucle thermodynamique est disposée hors du bâtiment ou à l'intérieur d'un local technique de ce bâtiment.

Les évolutions de la législation et des normes en matière d'environnement conduisent à utiliser des fluides frigorigènes dans les boucles thermodynamiques, notamment des fluides frigorigènes à base d'hydrocarbures (communément appelés HC). Ce type de fluide frigorigène a pour inconvénient majeur d'être très inflammable ce qui peut le rendre très dangereux s'il venait à s'échapper hors de la boucle thermodynamique en cas de fuite, a fortiori à l'intérieur d'un bâtiment habité ou sensible.

Lorsqu'une fuite de fluide frigorigène survient, celle-ci peut se produire entre l'intérieur du circuit le contenant et le circuit de l'installation de transfert d'énergie dans lequel, si la fuite est lente, le fluide, à l'état de gaz, se répand alors sous forme de trains de bulles. Une partie du volume d'eau de l'installation peut être ainsi progressivement remplacée au moins partiellement par le fluide frigorigène. Lorsque l'installation est une installation de chauffage, le fluide frigorigène peut ainsi se diffuser dans les organes d'émission de chaleur, tels que les radiateurs. Le risque principal est que le fluide frigorigène soit libéré dans le bâtiment par une purge manuelle d'un utilisateur ou une purge automatique d'un dispositif dédié de l'installation.

Lors d'une fuite importante de fluide frigorigène, un volume important de gaz s'introduit dans le circuit hydraulique de transfert d'énergie, augmentant ainsi de manière importante et brutale la pression à l'intérieur de celui-ci. Ainsi, en plus des dangers identifiés en cas de fuite lente, une vidange massive de fluide frigorigène peut se produire par une soupape de de sécurité de l'installation. Un volume important de fluide frigorigène hautement inflammable peut ainsi être libéré dans le local où est situé cette soupape de sécurité.

Il est donc primordial de réduire le risque de propagation de tels fluides frigorigènes à l'intérieur de bâtiments où ces installations sont présentes en cas de fuite.

Il existe donc un besoin pour rendre une installation de transfert d'énergie plus sécuritaire vis-à-vis d'une éventuelle fuite de fluide frigorigène.

Pour cela, l'invention propose un module hydraulique pour une installation de production d'énergie calorifique défini par la revendication 1.

Un tel module hydraulique permet une double fonctionnalité de séparation de phases et de fermeture du circuit de fluide circulant à l'intérieur de l'organe de séparation. Il est ainsi possible de libérer le gaz présent dans le fluide circulant dans l'organe de séparation pour éviter sa diffusion dans l'ensemble de circuit. Ensuite, le clapet flotteur permet de stopper la circulation du fluide lorsque la pression du gaz est devenue trop importante et donc possiblement dangereuse. La fermeture de l'orifice de sortie par le clapet flotteur permet ainsi d'isoler la portion aval du circuit de fluide pour limiter la diffusion de gaz frigorigène.

Le module hydraulique peut être condenseur d'une boucle thermodynamique.

Il est ainsi possible d'évacuer le gaz présent dans le circuit vers l'extérieur du bâtiment. Cette évacuation peut être réalisée via une conduite d'évacuation reliée à l'organe de régulation et débouchant au niveau d'un espace extérieur au bâtiment ou directement hors du bâtiment si le dispositif séparateur de sécurité est disposé hors du bâtiment. Ceci permet une évacuation progressive du gaz ce qui permet de conserver un fonctionnement satisfaisant de l'installation de transfert d'énergie, notamment lors d'une fuite lente de fluide frigorigène.

L'organe de régulation peut prendre la forme d'un purgeur actionné par le volume de gaz quand celui-ci atteint le seuil d'évacuation.

Selon un mode de réalisation du module hydraulique, celui-ci comprend en outre un organe de sécurité en communication de fluide avec la cavité de réception pour permettre l'évacuation du gaz ou du liquide hors de la cavité de réception lorsque la pression de gaz à l'intérieur de la cavité de réception atteint une pression seuil de sécurité, le dispositif de sécurité étant distinct de l'organe de régulation.

Cet organe de sécurité permet de pallier une fuite importante de fluide frigorigène engendrant une augmentation importante de la pression de gaz à l'intérieur de la cavité de réception. Cet organe de sécurité a pour objectif de se déclencher avant qu'une pièce ou un élément de l'installation ne se détériore sous l'action du gaz sous pression.

La combinaison de l'organe de régulation et de l'organe de sécurité peut permettre de réaliser un contrôle en deux temps de l'installation de transfert d'énergie : un premier temps où le fluide frigorigène peut être évacué par l'organe de régulation sans entraver le fonctionnement de l'installation de transfert d'énergie et un deuxième temps où la pression du gaz devient trop importante obligeant une évacuation du gaz de plus grande ampleur.

L'organe de sécurité peut être une soupape de sécurité haut débit permettant l'évacuation d'une quantité importante de fluide frigorigène.

Selon un mode de réalisation du module hydraulique, l'organe de sécurité comprend un élément de rupture configuré pour se rompre lorsque la pression à l'intérieur de la cavité de réception atteint le seuil de sécurité de manière à permettre l'évacuation du gaz ou du liquide hors de la cavité de réception.

Selon un mode de réalisation du module hydraulique, l'organe de régulation est en outre configuré pour permettre l'évacuation du gaz hors de la cavité de réception lorsque la pression de gaz à l'intérieur de la cavité de réception est supérieure à une pression seuil de régulation, la pression seuil de régulation étant inférieure à la pression seuil de sécurité.

Selon un mode de réalisation du module hydraulique, la cavité de réception s'étend le long d'un axe d'écoulement du fluide destiné à être orienté le long d'un axe vertical lorsque le dispositif séparateur de sécurité est en position de fonctionnement, l'orifice de sortie de la cavité de réception étant orienté le long de cet axe d'écoulement.

Cette configuration verticale de la cavité de réception et l'orifice de sortie permet un rappel du clapet flotteur dans sa position de fermeture sous l'effet de la gravité, si l'action du liquide est inférieure à celle-ci. Ainsi, le retour du clapet flotteur dans sa position de fermeture est réalisé de manière sure avec une configuration peu coûteuse.

Selon un mode de réalisation du module hydraulique, celui-ci comprend en outre un guide de retenue du clapet flotteur, le guide de retenue étant disposé au niveau de l'orifice de sortie et configuré pour guider le clapet flotteur entre les positions d'ouverture et de fermeture de l'orifice de sortie.

Le guide de retenue permet de figer la position maximale d'ouverture prise par le clapet flotteur. Il est ainsi possible de définir la course du clapet flotteur entre les positions d'ouverture et de fermeture de l'orifice de sortie de manière à contrôler la réactivité de la fermeture de cet office de sortie (i.e. distance à parcourir par le clapet flotteur entre ses positions extrêmes).

Selon un mode de réalisation du module hydraulique, dans lequel l'organe de séparation comprend une grille disposée entre les orifices d'entrée et de sortie de la cavité de réception et configurée pour agiter le fluide s'écoulant à l'intérieur de la cavité de réception pour en améliorer le dégazage.

Selon un mode de réalisation du module hydraulique, l'organe de séparation comprend une rampe formant un conduit d'écoulement de section transversale décroissante depuis l'orifice d'entrée vers l'orifice de sortie.

Cette conformation de l'organe de séparation permet d'améliorer encore d'avantage la séparation de phases liquide/gaz (i.e. dégazage). Le brassage du fluide est en effet renforcé de manière à libérer le gaz et lui permettre de se libérer de la phase liquide du fluide.

Selon un mode de réalisation du module hydraulique, l'orifice d'entrée est configuré pour permettre l'alimentation en fluide de la cavité de réception par déversement. Ceci permet également d'améliorer le dégazage du fluide.

Une alimentation par déversement est réalisée en ayant un orifice d'entrée orienté de manière verticale en position de fonctionnement du dispositif séparateur de sécurité. Le fluide s'accumule dans un espace entourant au moins partiellement l'orifice d'entrée. L'élévation du niveau de fluide dans cet espace entraine ainsi un déversement du fluide présent à la périphérie de l'orifice d'entrée. Cet écoulement par déversement améliore encore d'avantage la séparation de phase liquide/gaz.

Selon un mode de réalisation du module hydraulique, l'orifice d'entrée est orienté tangentiellement à une paroi de la cavité de réception de manière à projeter le fluide le long de cette paroi de la cavité de réception pour générer un écoulement cyclonique du fluide à l'intérieur de la cavité de réception.

Cette configuration générant un écoulement cyclonique permet de renforcer la séparation de phase liquide/gaz.

Selon un mode de réalisation du module hydraulique, celui-ci forme un accessoire additionnel à connecter à une installation de transfert d'énergie et dans lequel le corps forme une enveloppe extérieure du dispositif séparateur de sécurité, le corps comprenant deux connexions formant respectivement les orifices d'entrée et de sortie de la cavité de réception, chaque connexion étant configurée pour être connectée à une conduite de l'installation de transfert d'énergie pour raccorder les orifices d'entrée et de sortie à une source d'alimentation en fluide et à un circuit récepteur de liquide de ladite installation de transfert d'énergie, respectivement.

Cette configuration du dispositif séparateur de sécurité sous forme d'accessoire additionnel permet une grande flexibilité et une simplicité d'installation du dispositif. Ce dernier peut ainsi être installé sur une installation existante en raccordant l'accessoire additionnel au niveau d'une conduite. L'accessoire additionnel vient ainsi en remplacement d'une portion de cette conduite qui aura été soustraite préalablement. Pour un fonctionnement optimum, l'accessoire additionnel est à installer au niveau d'une conduite de départ du fluide vers les organes récepteurs de l'installation de transfert d'énergie, par exemple des radiateurs.

Selon un mode de réalisation du module hydraulique, celui-ci comprend en outre, un échangeur de chaleur disposé à l'intérieur du réservoir. Ceci a pour avantage d'être disposé au plus près d'une fuite éventuelle au niveau de l'échangeur de chaleur. Il est à noter que le fluide objet de la fuite peut être à haute pression. Ainsi, il est possible d'éviter la propagation de cette fuite vers d'autres conduites ou volumes. Cette configuration améliore la réactivité du système de sécurité.

Selon un mode de réalisation du module hydraulique, la conduite de refoulement s'étend au niveau d'une zone centrale du réservoir, l'échangeur de chaleur s'étendant autour de la conduite de refoulement.

### Brève description des dessins

Les dessins annexés illustrent l'invention :
[Fig. 1] représente un schéma d'une installation de transfert d'énergie comprenant un système de pompe à chaleur monobloc.
[Fig. 2] représente un schéma d'une installation de transfert d'énergie comprenant un système de pompe à chaleur à éléments séparés comprenant une unité extérieure.
[Fig. 3] représente une vue en perspective d'un module hydraulique en transparence comprenant un condenseur coaxial.
[Fig. 4] représente une vue en coupe du module hydraulique de la figure 3.
[Fig. 5] représente une vue en coupe détaillée d'un exemple de condenseur coaxial du module hydraulique de la figure 3.
[Fig. 6] représente un schéma d'une installation de transfert d'énergie lors d'une fuite de fluide frigorigène dans le circuit d'eau de chauffage.
[Fig. 7] représente une vue en coupe d'un module hydraulique comprenant un dispositif séparateur de sécurité.
[Fig. 8] représente une vue en coupe d'un module hydraulique comprenant un dispositif séparateur de sécurité lors d'une fuite de fluide frigorigène.
[Fig. 9] représente une vue en coupe d'un module hydraulique comprenant un dispositif séparateur de sécurité lors d'une fuite de fluide frigorigène.
[Fig. 10] représente un schéma d'une installation de transfert d'énergie telle qu'illustrée en figure 1 comprenant un module hydraulique avec un dispositif séparateur de sécurité, lors d'une fuite de fluide frigorigène.
[Fig. 11] représente un schéma d'une installation de transfert d'énergie telle qu'illustrée en figure 2 comprenant un module hydraulique avec un dispositif séparateur de sécurité, lors d'une fuite de fluide frigorigène.
[Fig. 12] représente une vue en coupe d'un module hydraulique avec un dispositif séparateur de sécurité comprenant un organe de sécurité.
[Fig. 13] représente une vue en coupe d'un module hydraulique avec un dispositif séparateur de sécurité ayant une rampe de guidage.
[Fig. 14] représente une vue en coupe partielle en perspective d'un module hydraulique apte à générer un écoulement cyclonique dans le corps du dispositif séparateur de sécurité.
[Fig. 15] représente une vue en coupe partielle en perspective d'un module hydraulique apte à générer un écoulement cyclonique dans le corps du dispositif séparateur de sécurité.
[Fig. 16] représente un schéma d'un mode de réalisation du dispositif séparateur de sécurité sous forme d'un accessoire additionnel à raccorder à une installation de transfert d'énergie.

### Description de mode(s) de réalisation

Il est proposé un dispositif séparateur de sécurité pour une installation de transfert d'énergie. Ce dispositif séparateur de sécurité peut être intégré à un module hydraulique de cette installation de transfert d'énergie ou bien réalisé sous forme d'accessoire additionnel à raccorder à une conduite de cette installation. Ces deux configurations sont décrites ci-dessous en lien avec les figures.

On entend par une installation de « transfert d'énergie », une installation apte à transférer de l'énergie entre une source froide et une source chaude via un appareil utilisant une boucle thermodynamique. En d'autres termes, l'installation de transfert d'énergie comprend un système de pompe à chaleur transférant de l'énergie via un fluide frigorigène. Ce transfert d'énergie est réalisé de préférence pour le chauffage ou la climatisation d'un bâtiment d'habitation ou de bureaux, ou bien encore pour le chauffage d'eau sanitaire. Une installation de transfert d'énergie est par exemple une installation de chauffage, de climatisation ou de chauffage d'eau sanitaire.

Le fluide frigorigène utilisé dans la boucle thermodynamique est de préférence un gaz frigorigène. Ce gaz frigorigène est par exemple à base d'hydrocarbures (communément appelés « HC »).

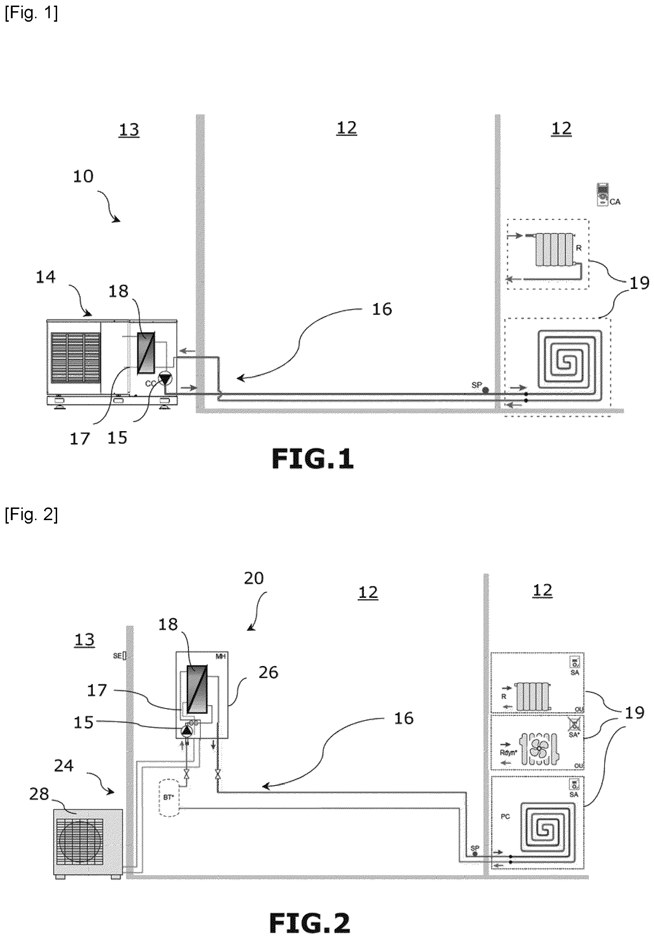

Deux exemples d'installation de transfert d'énergie sont illustrés en figures 1 et 2 comprenant deux configurations différentes de système de pompe à chaleur. Une première installation de chauffage 10 illustrée en figure 1 comprend un système de pompe à chaleur 14 en configuration monobloc. Une deuxième installation de chauffage 20 illustrée en figure 2 comprend un système de pompe à chaleur 24 en configuration séparée (appelée « split »). Le dispositif séparateur de sécurité qui est décrit dans ce document est compatible avec chacune de ces configurations d'installation.

L'installation de chauffage 10 de la figure 1 comprend un circuit d'eau de chauffage 16 relié au système de pompe à chaleur 14. Le système de pompe à chaleur 14 est disposé à l'intérieur d'un caisson regroupant la totalité de la boucle thermodynamique, i.e. le compresseur, l'évaporateur, le détendeur et le condenseur. Ce système de pompe à chaleur 14 est disposé à l'extérieur 13 d'un bâtiment 12 chauffé par le circuit de chauffage 16. De manière alternative, le système de pompe à chaleur 14 peut être disposé à l'intérieur d'un local technique ce bâtiment 12.

Le système de pompe à chaleur 14 comprend un condenseur 18 relié au circuit de chauffage 16. Le condenseur 18 est également relié à un circuit de fluide frigorigène 17 de la boucle thermodynamique de manière à pouvoir transférer de l'énergie entre le fluide frigorigène et l'eau de chauffage circulant dans le circuit de chauffage 16. Une pompe de circulation 15 disposé dans le circuit de chauffage 16 permet la mise en mouvement de l'eau de chauffage. De manière symétrique, un compresseur (non illustré) est présent dans la boucle thermodynamique pour mettre en mouvement le fluide frigorigène et augmenter son niveau de pression.

L'installation de chauffage 10 comprend également des organes émetteurs de chaleur 19 reliés au circuit de chauffage 16 (radiateurs ou planchers chauffants par exemple). L'eau de chauffage chauffée par le fluide frigorigène circule à l'intérieur de ces organes émetteurs de chaleur 19 pour chauffer un espace du bâtiment 12. Ces organes émetteurs de chaleur 19 sont par exemple un radiateur, un plancher chauffant ou un sèche-serviette.

L'installation de chauffage 20 de la figure 2 diffère de l'installation de chauffage 10 en ce que le système de pompe à chaleur 24 est ici en configuration séparée (communément appelée « split »). En d'autres termes, le système de pompe à chaleur 24 comprend un caisson intérieur 26 disposé à l'intérieur du bâtiment 12 et une unité extérieure 28 disposée à l'extérieur 13 du bâtiment 12. Le caisson intérieur 26 comprend le condenseur 18 de la boucle thermodynamique. Le condenseur 18 est relié au circuit de chauffage 16. L'unité extérieure 28 comprend notamment un évaporateur réalisant un transfert d'énergie entre l'air extérieur et le fluide frigorigène et un compresseur assurant la circulation et la pressurisation de celui-ci. La boucle thermodynamique est donc disposée entre l'extérieur 13 et l'intérieur du bâtiment 12.

L'installation de chauffage 20 comprend également au moins un organe émetteur de chaleur 19 relié au circuit de chauffage 16.

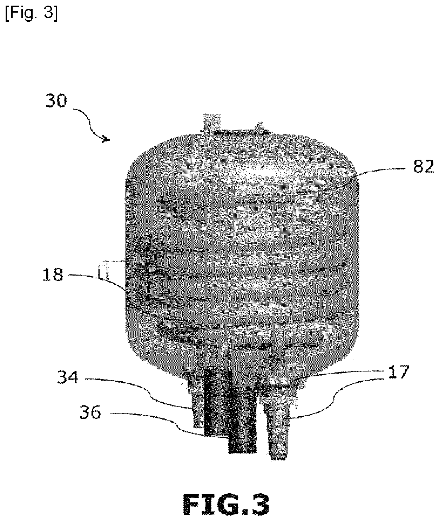

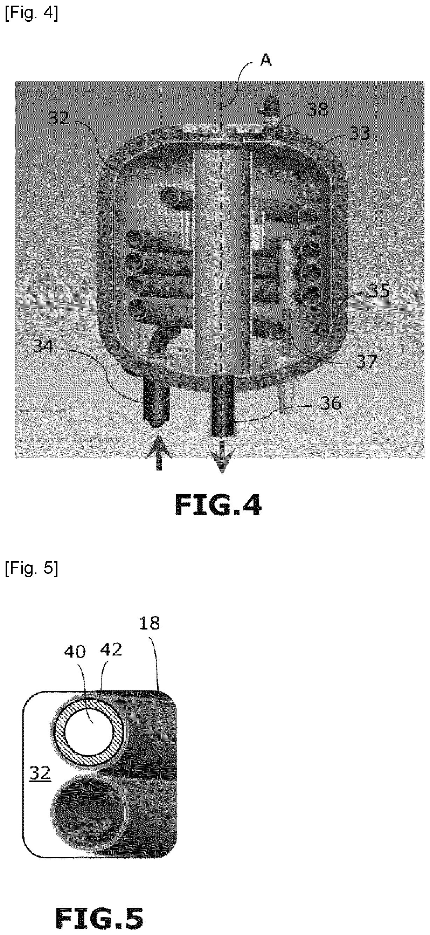

Dans les installations de chauffage 10 et 20, le condenseur 18 est disposé à l'intérieur d'un module hydraulique 30 illustré en figures 3 et 4. On entend par « module hydraulique » une enceinte ou un ballon définissant un espace interne ou réservoir 32 de réception d'un fluide. Le module hydraulique 30 est relié au circuit de chauffage 16 de manière à faire circuler cette eau de chauffage à l'intérieur du réservoir 32. En particulier, le module hydraulique 30 comprend une entrée de fluide 34 destinée à être reliée à une conduite d'arrivée d'eau de chauffage et une sortie de fluide 36 destinée à être reliée à une conduite de départ d'eau de chauffage.

La conduite de départ d'eau de chauffage s'étend entre le module hydraulique 30 et l'un ou plusieurs des organes émetteurs de chaleur 19 pour alimenter ces derniers en eau de chauffage. En d'autres termes, l'entrée de fluide 34 est destinée à être raccordée à un circuit de retour (ou circuit d'eau froide) du circuit de chauffage 16.

La conduite d'arrivée d'eau de chauffage s'étend entre l'un ou plusieurs des organes émetteurs de chaleur 19 et le module hydraulique 30 pour retourner cette eau de chauffage vers le module hydraulique 30. En d'autres termes, la sortie de fluide 36 est destinée à être raccordée à un circuit d'alimentation (ou circuit d'eau chaude) du circuit de chauffage 16.

La sortie de fluide 36 du module hydraulique 30 comprend une conduite de refoulement 37 s'étendant à l'intérieur du réservoir 32 entre une partie supérieure 33 et une partie inférieure 35 de ce réservoir 32. La conduite de refoulement 37 forme un orifice d'aspiration 38 disposé en partie supérieure du réservoir 32. La conduite de refoulement 37 permet l'acheminement vers la conduite de départ du circuit de chauffage 16 de l'eau de chauffage présente dans le réservoir 32 ayant reçu l'énergie provenant du condenseur 18. La conduite de refoulement 37 s'étend de préférence au niveau d'une zone centrale du réservoir 32, de manière encore préférée le long d'un axe longitudinal médian A du module hydraulique 30.

La partie supérieure 33 du réservoir 32 est de préférence formée par au moins la moitié supérieure du réservoir 32. De manière encore préférée, la partie supérieure 33 du réservoir 32 est formée par le quart supérieur du réservoir 32.

Le condenseur 18 est un échangeur de chaleur configuré pour transférer de l'énergie entre le fluide frigorigène et l'eau de chauffage présente dans le réservoir 32. En référence aux figures 3 et 4, le condenseur 18 est ici de la forme d'un échangeur de chaleur coaxial (parfois appelé « serpentin »). En particulier, le condenseur 18 s'étend autour de la conduite de refoulement 37 et le long de celle-ci. Le condenseur 18 comprend deux conduits coaxiaux dans lesquels circulent respectivement le fluide frigorigène et l'eau de chauffage.

Une coupe transversale partielle du condenseur est visible en figure 5. On voit que le condenseur 18 comprend un premier conduit 40 raccordé à l'entrée de fluide 34 pour la circulation de l'eau de chauffage au travers du condenseur 18. Ce premier conduit 40 est ouvert en partie supérieure 33 du réservoir 32 pour permettre à l'eau de chauffage d'être refoulée à l'intérieur du réservoir 32. Ainsi, l'eau de chauffage provenant de la conduite d'arrivée du circuit de chauffage 16 entre dans le module hydraulique au travers de l'entrée de fluide 34, circule dans le condenseur 18 au travers du premier conduit et est refoulée dans le réservoir 32. Cette eau de chauffage s'écoule ensuite dans la conduite de refoulement 37 au travers de l'orifice d'aspiration 38 et s'écoule ensuite dans la conduite de départ du circuit de chauffage 16. L'eau de chauffage entre donc dans la conduite de refoulement au travers de l'orifice d'aspiration par déversement, i.e. c'est l'augmentation du niveau d'eau à l'intérieur du réservoir 32 qui entraine l'introduction de l'eau de chauffage à l'intérieur de la conduite de refoulement 37. Pour cela, une extrémité de sortie 82 du condenseur 18, ici du premier conduit 40, est disposée à côté ou en dessous de l'orifice d'aspiration 38 de la conduite de refoulement 37. Cette position de l'extrémité de sortie 82 permet à l'eau de chauffage de ne pas être directement injectée dans la conduite de refoulement 37.

Le condenseur 18 comprend un deuxième conduit 42 raccordé au circuit de fluide frigorigène 17 pour la circulation de celui-ci au travers du condenseur 18. Le conduit 42 ne débouche donc pas à l'intérieur du réservoir 32. Le deuxième conduit 42 s'étend autour du premier conduit 40 de manière à pouvoir transmettre l'énergie thermique du fluide frigorigène à l'eau de chauffage circulant dans le premier conduit 40 et également à l'eau de chauffage présente dans le réservoir 32.

De manière alternative à un échangeur coaxial, le condenseur 18 peut également être de toute autre forme, comme par exemple un échangeur à plaques brasées.

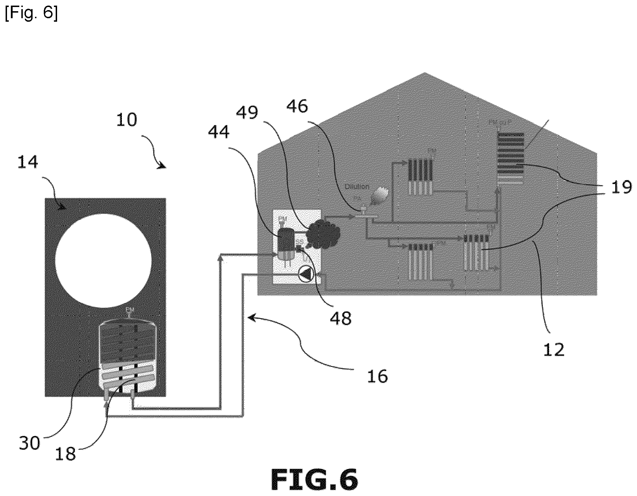

La figure 6 illustre l'apparition d'une fuite de fluide frigorigène dans le condenseur 18. Cette fuite peut être générée par une fissure ou un endommagement du condenseur 18 au niveau de l'interface entre le fluide frigorigène et l'eau de chauffage. Lors d'un tel évènement, le fluide frigorigène est injecté dans le circuit d'eau de chauffage 16. Le gaz peut être transporté sous forme de bulles de gaz ou en se dissoudre dans l'eau de chauffage. L'accumulation de ce gaz forme des poches à différents endroits du circuit de chauffage 16, notamment dans le réservoir 32, dans les organes émetteurs de chaleur 19 et éventuellement dans un ballon de stockage 44 disposé à l'intérieur du bâtiment 12.

Comme indiqué précédemment, lors d'une fuite lente de fluide frigorigène, l'eau de chauffage est progressivement remplacée par le fluide frigorigène. Ceci peut correspondre à un remplacement de 67L pour 2kg de fluide frigorigène qui correspond à une charge moyenne. L'introduction de fluide dans l'eau de chauffage entraine un arrêt ou un dysfonctionnement des organes de l'installation de chauffage par formation de gaz et augmentation de la pression. La pompe de circulation de l'eau de chauffage s'arrête notamment une fois le volume de gaz trop important. Les organes de diffusion de chaleur deviennent également de moins en moins efficaces car ils sont également envahis de gaz. Le risque principal est que le fluide frigorigène soit libéré dans le bâtiment 12 par une purge manuelle d'un utilisateur ou une purge automatique 46 d'un dispositif dédié de l'installation.

Lors d'une fuite importante de fluide frigorigène, un volume important de gaz s'introduit brutalement dans le circuit de chauffage 16 augmentant ainsi de manière importante et rapide la pression à l'intérieur de celui-ci. Ainsi, en plus des dangers identifiés en cas de fuite lente, une vidange massive de fluide frigorigène peut alors se produire par une soupape de de sécurité 48 de l'installation. Un volume important 49 de fluide frigorigène hautement inflammable peut ainsi être libéré dans le local où est situé cette soupape de sécurité.

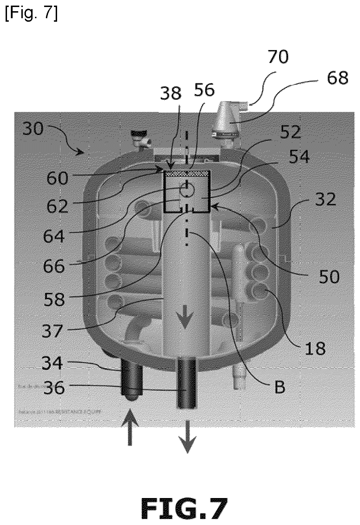

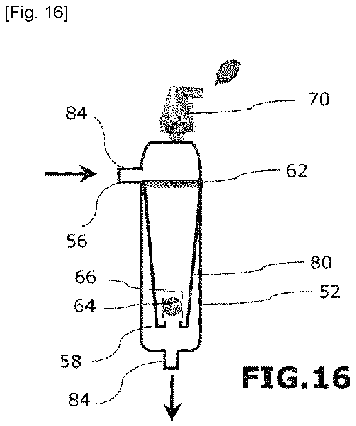

Un dispositif séparateur de sécurité est proposé pour limiter le risque de propagation du fluide frigorigène dans l'installation de chauffage en cas de fuite de ce fluide frigorigène. Une première configuration est illustrée en référence aux figures 7 à 10 et 13 à 15 dans laquelle le dispositif séparateur de sécurité est intégré à un module hydraulique. Une deuxième configuration du dispositif séparateur de sécurité est proposée en référence à la figure 16 dans lequel le dispositif séparateur de sécurité est sous la forme accessoire additionnel à raccorder à une conduite.

En référence à la figure 7, un dispositif séparateur de sécurité 50 comprend un corps 52 définissant une cavité de réception 54 d'un fluide. Le corps 52 comprend un orifice d'entrée 56 pour l'alimentation en fluide de la cavité de réception 54. Le corps 52 comprend en outre un orifice de sortie 58 pour l'évacuation du fluide de la cavité de réception 54.

La cavité de réception 54 s'étend le long d'un axe d'écoulement B du fluide. Le corps 52 est destiné à être orienté le long d'un axe vertical lorsque le dispositif séparateur de sécurité 50 est en position de fonctionnement. En d'autres termes, l'axe d'écoulement B est de préférence confondu avec l'axe longitudinal médian A du module hydraulique 30. L'orifice de sortie 58 est de préférence orienté le long de cet axe d'écoulement B. En d'autres termes, l'orifice de sortie 58 est de préférence transversal à l'axe d'écoulement B.

L'orifice de sortie 58 et le clapet flotteur 64 sont de préférence configurés de sorte que le clapet flotteur 64 ferme l'orifice de sortie 58 tout en laissant un volume d'eau de chauffage au-dessus de l'orifice de sortie 58. Ce volume d'eau de chauffage permet de limiter l'insertion du gaz au travers de l'orifice de sortie 58 avant que le clapet flotteur 64 ne ferme l'orifice de sortie 58. Pour cela, le clapet flotteur 64 peut être conçu de sorte que lorsqu'il est au contact de l'orifice de sortie 58 et qu'il le ferme, le niveau d'eau de chauffage soit au-dessus de l'orifice de sortie 58. Ceci peut être obtenu avec un clapet flotteur 64 en forme de sphère avec un orifice de sortie circulaire dont le diamètre est inférieur au diamètre de cette sphère. Ainsi, un écart est maintenu entre le niveau d'eau de chauffage situé aux environs de la section médiane de la sphère et le point d'appui de l'orifice de sortie 58 sur la sphère.

Le corps 52 est disposé au niveau de la sortie de fluide 36 du module hydraulique 30. De manière préférée, le corps 52 est disposé à l'intérieur de la conduite de refoulement 37 du module hydraulique 30. De manière encore préférée, le corps 52 est disposé au niveau de l'orifice d'aspiration 38 de cette conduite de refoulement 37. Ce positionnement en partie supérieure du réservoir 32 permet une meilleure réactivité du dispositif séparateur de sécurité 50 pour un volume faible de fluide frigorigène. En particulier, le corps 52 est disposé de manière à ce que l'orifice d'entrée 56 soit au niveau de l'orifice d'aspiration 38.

De manière alternative, le corps 52 peut être disposé à toute position à l'intérieur de la conduite de refoulement 37, notamment en partie inférieure du réservoir 32. De manière encore alternative, le corps 52 peut être disposé à l'extérieur du réservoir 32 en aval de la conduite de refoulement 37 par rapport au sens d'écoulement de l'eau de chauffage.

De manière préférée, le corps 52 définit une portion de fixation à la conduite de refoulement 37. Cette portion de fixation peut être un rebord, une patte de fixation ou tout élément en saillie permettant de reposer ou de se solidariser avec la conduite de refoulement 37. De manière alternative ou combinée, le corps 52 peut être configuré pour être ajusté de manière serrée ou vissée à l'intérieur de la conduite de refoulement 37.

Le dispositif séparateur de sécurité 50 comprend en outre un organe de séparation 60 disposé dans la cavité de réception 54. Cet organe de séparation 60 est configuré pour séparer le gaz et le liquide admis à l'intérieur de la cavité de réception 54. En effet, l'eau de chauffage admise au travers de l'orifice d'aspiration 38 peut être mélangé à du fluide frigorigène lorsqu'une fuite intervient dans le condenseur 18. Ce fluide frigorigène sous forme de gaz peut être dissout dans l'eau de chauffage ou mélangé sous forme de bulles. L'organe de séparation 60 a pour objectif de séparer la phase gazeuse de la phase liquide du fluide admis. En d'autres termes, l'organe de séparation 60 a pour but d'extraire le gaz contenu dans l'eau de chauffage. Ainsi, l'eau de chauffage s'écoule dans la cavité de réception 54 puis dans la conduite d'écoulement 37 tandis que le gaz séparé de l'eau de chauffage remonte en partie supérieure 33 du réservoir 32, dû à sa faible densité.

L'organe de séparation 60 comprend une grille 62 disposée entre les orifices d'entrée 56 et de sortie 58 de la cavité de réception 54. La grille 62 est configurée pour agiter le fluide admis à l'intérieur de la cavité de réception 54 pour en améliorer le dégazage. La grille 62 forme une pluralité d'obstacles définissant des orifices de passage du fluide. Ces obstacles, s'étendant principalement transversalement à l'écoulement du fluide permettent d'agiter le fluide.

Le dispositif séparateur de sécurité 50 comprend en outre un clapet flotteur 64 disposé dans la cavité de réception 54. Le clapet flotteur 64 est configuré pour être déplacé entre une position d'ouverture et une position de fermeture de l'orifice de sortie 58. Le clapet flotteur 64 a pour objectif d'empêcher le passage du gaz au travers de l'orifice de sortie 58.

Le clapet flotteur 64 se place dans sa position d'ouverture sous l'action du liquide présent dans la cavité de réception 54. Lorsque le clapet flotteur 64 est en position d'ouverture, l'écoulement du liquide est permis depuis l'orifice d'entrée 56 au travers de l'orifice de sortie 58. Le clapet flotteur 64 est conçu de sorte que la poussée d'Archimède induite par l'eau de chauffage le maintienne dans sa position d'ouverture. Pour cela, le clapet flotteur 64 est fabriqué de telle façon que sa densité globale soit inférieure à celle de l'eau de chauffage pour permettre à l'eau de chauffage de soulever le clapet flotteur 64. Cette position d'ouverture où le clapet flotteur est soulevé par l'eau de chauffage est par exemple visible en figure 7. Le clapet flotteur 64 est également fabriqué de telle façon que sa densité globale soit supérieure à celle du gaz pour que le clapet flotteur 64 soit maintenu par gravité en position de fermeture en l'absence d'eau de chauffage.

La conformation du clapet flotteur 64 est ainsi choisie pour permettre au clapet flotteur 64 d'avoir un poids réel inférieur à la poussée d'Archimède engendrée par l'eau de chauffage. Ceci est obtenu en choisissant une géométrie, un matériau et/ou des dimensions du clapet flotteur 64 adaptées.

Le clapet flotteur 64 est par exemple et de préférence une sphère de manière à faciliter l'obturation de l'orifice de sortie 58 en position de fermeture. En effet, la forme de sphère permet de s'affranchir du contrôle de l'orientation du clapet flotteur 64 entre les positions d'ouverture de fermeture. De manière alternative, le clapet flotteur 64 peut être cylindrique ou de toute autre forme permettant l'obturation de l'orifice de sortie 58. Ainsi, le clapet flotteur 64 peut avoir une surface d'obturation plane apte à recouvrir l'orifice de sortie 58 pour l'obstruer.

L'orifice de sortie 58 est de préférence en complémentarité de forme avec le clapet flotteur 64 pour permettre son obturation par le clapet flotteur 64. A titre d'exemple, l'orifice de sortie 64 présente une section circulaire lorsque le clapet flotteur est en forme de sphère ou de demi-sphère. De manière alternative, l'orifice de sortie 58 peut présenter une section de passage inférieure à la surface d'obturation plane du clapet flotteur 64 pour garantir la fermeture de l'orifice de sortie 58.

Le clapet flotteur 64 se place dans sa position de fermeture de l'orifice de sortie 58 lorsque le volume d'eau de chauffage dans la cavité de réception 54 devient trop faible pour soulever le clapet flotteur 64. Une fois en position de fermeture, la pression du gaz à l'intérieur de la cavité de réception 54 peut augmenter et exercer sur le clapet flotteur 64 un effort additionnel le maintenant en position de fermeture. Cet effort additionnel assure une étanchéité empêchant l'insertion de gaz au travers de l'orifice de sortie 58. En d'autres termes, le clapet flotteur 64 est dans sa position de fermeture quand la poussée d'Archimède induite par l'eau de chauffage sur le clapet flotteur n'est plus assez importante. Ceci est par exemple le cas lorsque le volume de gaz devient important ou qu'il n'y a plus assez d'eau de chauffage dans la cavité de réception 54. Ainsi, le clapet flotteur 64 se replace dans sa position de fermeture sous l'action du gaz et/ou sous l'action de la gravité.

Le dispositif séparateur de sécurité 50 comprend en outre un guide de retenue 66 du clapet flotteur 64. Le guide de retenue 66 est disposé au niveau de l'orifice de sortie 58 et configuré pour guider le clapet flotteur 64 entre les positions d'ouverture et de fermeture de l'orifice de sortie 58. Le guide de retenue 66 forme une butée de déplacement maximal du clapet flotteur 64. La position du clapet flotteur 64 lorsque l'orifice de sortie 58 est libre est ainsi connue et peut être définie. Il est par exemple avantageux de prévoir que cette butée soit proche de l'orifice de sortie 58 de manière à réduire la distance devant être parcourue par le clapet flotteur 64 pour revenir à sa position de fermeture de l'orifice de sortie 58. La position de cette butée permet ainsi de contrôler la réactivité du clapet flotteur et donc du dispositif séparateur de sécurité 50.

Selon une configuration préférée, le guide de retenue 66 forme une enceinte de réception du clapet flotteur 64. Le guide de retenue 66 est de préférence formé par une cage ou une portion de cage s'étendant à l'intérieur de la cavité de réception 54 depuis l'orifice de sortie 58. Cette cage enferme le clapet flotteur 64 qui peut se déplacer depuis sa position d'ouverture vers sa position de fermeture à l'intérieur de la cage. Ce mode de réalisation est visible en figure 7. Cette cage peut être formée par une ou plusieurs grilles ou par une pluralité de bras. De manière générale, la cage peut être réalisée par toute structure permettant une translation du clapet flotteur 64 entre les positions d'ouverture et de fermeture, tout en maintenant le clapet flotteur 64 à l'intérieur de cette cage.

De manière alternative, le guide de retenue 66 peut être un bras flexible, un cordon ou une chainette reliée d'une part au clapet flotteur 64 et d'autre part au corps 52. Dans ce cas, l'orifice de sortie 58 peut former un cône ou une géométrie convergeant vers l'orifice de sortie 58 pour participer au guidage du clapet flotteur 64.

Le dispositif séparateur de sécurité comprend en outre un organe de régulation 68 en communication de fluide avec la cavité de réception 54. L'organe de régulation est configuré pour évacuer le gaz hors de la cavité de réception 54 lorsque le volume de gaz à l'intérieur de la cavité de réception 54 atteint un volume seuil d'évacuation et/ou lorsque la pression de gaz à l'intérieur de la cavité de réception est supérieure à une pression seuil de régulation. Cette pression seuil de régulation peut être ajustable, par exemple définie à 3 bars. L'organe de régulation 68 permet d'ouvrir la cavité de réception 54 pour l'évacuation du gaz lorsque le volume seuil d'évacuation et/ou la pression seuil de régulation est atteint(e). L'organe de régulation 68 forme un orifice de régulation 70 au travers duquel le gaz est évacué.

L'organe de régulation 68 est par exemple un purgeur dans lequel un élément d'actionnement permet d'ouvrir la cavité de réception 54 en l'absence d'un volume suffisant d'eau de chauffage. Cet élément d'actionnement peut être un élément flotteur pouvant être actionné ou soulevé pour fermer un orifice de régulation. L'élément flotteur est configuré pour maintenir l'organe de régulation 68 fermé sous l'action de l'eau de chauffage. Lorsque le gaz remplace le volume d'eau de chauffage présent dans l'organe de régulation 68, l'élément flotteur n'est plus soulevé par l'eau de chauffage et descend par gravité. Cette descente de l'élément flotteur ouvre l'organe de régulation ce qui permet au gaz de s'échapper au travers de l'orifice de régulation. Lorsque le volume d'eau de chauffage redevient suffisant pour soulever l'élément flotteur, l'organe de régulation 58 se referme.

L'organe de régulation 68 est de préférence disposé dans la partie supérieure 33 du réservoir 32 de manière à pouvoir être actionné par le gaz qui s'accumule dans cette zone.

Les figures 7 à 9 illustrent le fonctionnement du dispositif séparateur de sécurité lors d'une fuite de fluide frigorigène.

En figure 7, la fuite de fluide frigorigène apparaît et le gaz se mélange dans l'eau de chauffage. Le réservoir 32 est rempli d'eau de chauffage circulant depuis l'entrée de fluide 34 vers la sortie de fluide 36 du module hydraulique 30. Le clapet flotteur 64 est en position d'ouverture de l'orifice de sortie 58. L'eau de chauffage circule donc librement au travers de la cavité de réception 54. Le volume d'eau de chauffage présent dans la cavité de réception 54 est suffisant pour que la poussée d'Archimède soulève le clapet flotteur 64 maintenant donc l'orifice de sortie 58 ouvert.

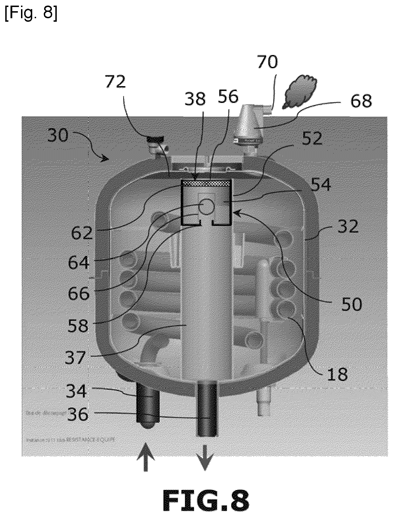

En figure 8, le volume de gaz augmente et une poche de gaz 72 se forme en partie supérieure 33 du réservoir 32. Cette poche de gaz 72 remplace une partie du volume d'eau de chauffage présent dans le réservoir 32. Le niveau d'eau de chauffage à l'intérieur de la cavité de réception 54 baisse à un niveau intermédiaire du guide de retenue 66. La densité du clapet flotteur 64 est choisie pour être supérieure à la densité du gaz mais inférieure à celle de l'eau de chauffage de sorte que le clapet flotteur 64 flotte à la surface de l'eau de chauffage. L'abaissement du niveau d'eau de chauffage entraine donc la descente du clapet flotteur 64. Le niveau d'eau de chauffage n'est toutefois pas encore au niveau de l'orifice de sortie 58 donc l'eau de chauffage peut toujours s'écouler au travers de cet orifice de sortie 58.

En parallèle, le volume d'eau de chauffage dans l'organe de régulation 68 a également diminué au point que l'élément flotteur n'est plus suffisamment soulevé par l'eau de chauffage. L'organe de régulation 68 s'ouvre donc et laisse s'échapper du gaz au travers de l'orifice de régulation 70.

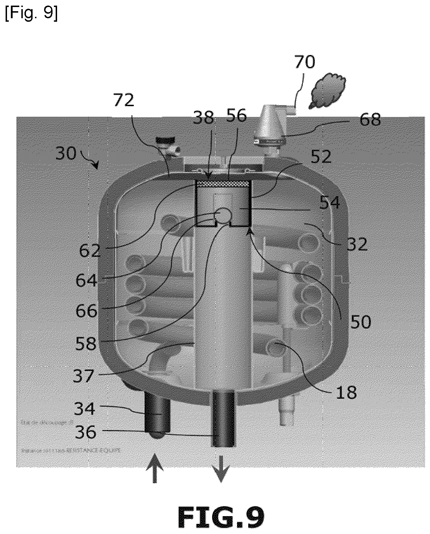

En figure 9, la poche de gaz 72 devient encore plus grande de sorte que le volume d'eau de chauffage dans le réservoir 32 diminue. Cette diminution est telle que le volume d'eau de chauffage dans la cavité de réception 54 n'est plus assez suffisant pour soulever le clapet flotteur 64 au-dessus de l'orifice de sortie 58. Le clapet flotteur 64 repose ainsi par gravité contre cet orifice de sortie 58, empêchant ainsi l'insertion du gaz au-delà du dispositif séparateur de sécurité 50. La pression de la poche de gaz 72 peut être amenée à augmenter ensuite ce qui a tendance à plaquer le clapet flotteur 64 contre l'orifice de sortie 58 et donc renforcer l'étanchéité entre le clapet flotteur 64 et l'orifice de sortie 58. Le dispositif séparateur de sécurité 50 empêche donc efficacement le gaz de sortir du module hydraulique 30 et de s'écouler dans le circuit d'eau de chauffage 16. L'organe de régulation 68 continue d'évacuer le gaz hors du réservoir 32.

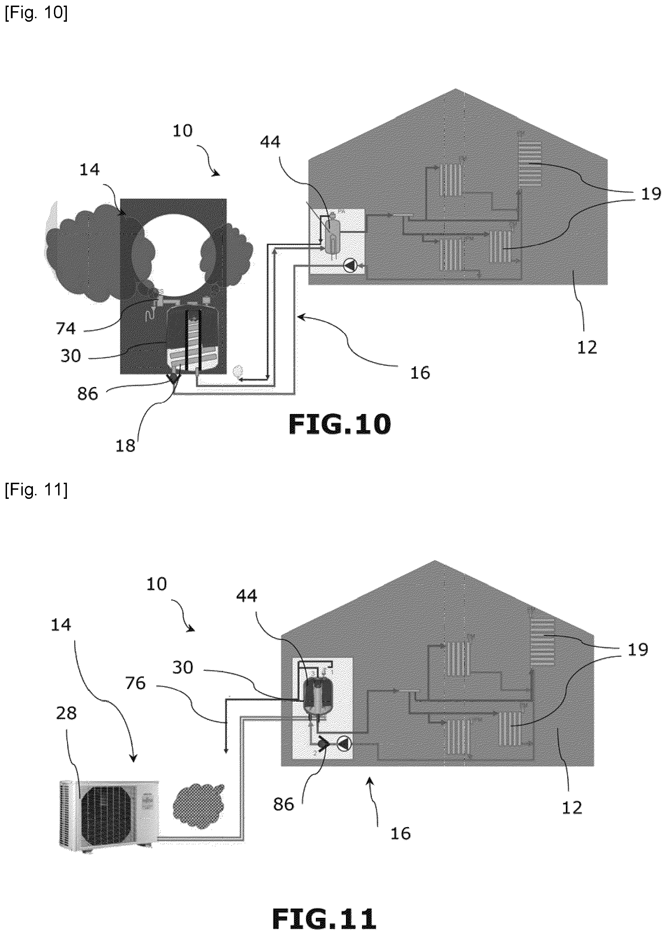

Une vue générale d'une installation de transfert d'énergie 10 comprenant un tel dispositif séparateur de sécurité est visible en figure 10. Lors d'une fuite de fluide frigorigène au niveau du condenseur 18, le gaz est évacué via l'organe de régulation 68. L'installation de transfert d'énergie peut également comprendre une soupape de sécurité 74 relié au réservoir 32 du module hydraulique 30. Le gaz peut également être évacué via cette soupape de sécurité 74.

Le module hydraulique 30 est disposé à l'extérieur du bâtiment 12 dans l'installation de transfert d'énergie 10. Le gaz peut donc être évacué directement dans l'atmosphère environnant ce module hydraulique 30. De manière alternative, l'installation de transfert d'énergie 10 peut comporter un circuit d'évacuation des gaz relié à l'organe de régulation 68 et, le cas échéant, à une soupape de sécurité 74 pour évacuer ces gaz à un endroit spécifique. Ce circuit d'évacuation est par exemple utile lorsque le système de pompe à chaleur 14 est disposé dans un local technique du bâtiment 12 ou lorsqu'on ne souhaite pas évacuer les gaz directement dans l'environnement où est situé le module hydraulique 30.

Un exemple de circuit d'évacuation 76 est illustré en figure 11 en lien avec une installation de transfert d'énergie 20 dans laquelle le module hydraulique 30 est disposé à l'intérieur du bâtiment 12.

Selon un mode de réalisation préféré, le dispositif séparateur de sécurité 50 comprend en outre un clapet anti-retour 86 dans le circuit d'eau de chauffage, en amont du module hydraulique 30, pour éviter une sortie de gaz par l'entrée de fluide 34 du module hydraulique 30.

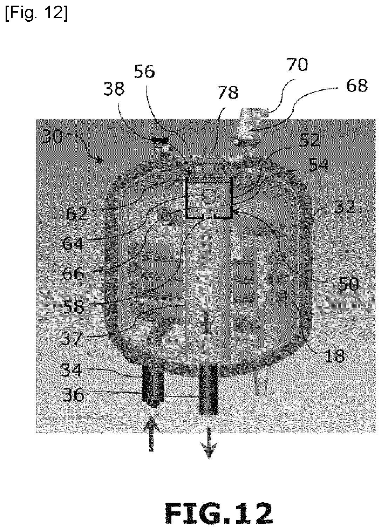

En référence à la figure 12, le dispositif séparateur de sécurité peut également comprendre un organe de sécurité 78 en communication de fluide avec la cavité de réception 54. L'organe de sécurité 78 est configuré pour permettre l'évacuation du gaz ou du liquide hors de la cavité de réception 54 lorsque la pression de gaz à l'intérieur de la cavité de réception 54 atteint une pression seuil de sécurité. Cette pression seuil de sécurité est choisie pour correspondre à un niveau de pression auquel l'intégrité de l'installation est en jeu. La pression seuil de sécurité est notamment supérieure à la pression seuil de régulation. Cette pression seuil de sécurité est par exemple de 10 bars pour éviter toute déformation irréversible.

L'organe de sécurité est distinct de l'organe de régulation 68. En effet, l'organe de régulation 68 a pour fonction d'évacuer de petites quantités de gaz progressivement en fonction de l'augmentation du volume et/ou de la pression de gaz. Le module hydraulique reste ainsi fonctionnel après actionnement de l'organe de régulation 68. L'organe de sécurité 78 a pour fonction d'évacuer une grande quantité de gaz lorsque la pression de gaz devient critique pour l'intégrité de l'installation. Selon la technologie employée, l'installation peut être hors service après actionnement de l'organe de sécurité 78 et nécessiter une opération de maintenance.

L'organe de sécurité 78 présente un orifice de sécurité (non visible) au travers duquel le gaz et/ou l'eau de chauffage sont évacués. La section de passage de l'orifice de sécurité est supérieure à la section de passage de l'orifice de régulation 70. De manière préférée, l'orifice de sécurité présente une section de passage au moins deux fois supérieure à la section de passage de l'orifice de régulation 70. De manière encore préférée, l'orifice de sécurité présente une section de passage au moins cinq fois supérieure à la section de passage de l'orifice de régulation 70.

L'organe de sécurité 78 est par exemple un élément de rupture configuré pour se rompre lorsque la pression à l'intérieur de la cavité de réception atteint le seuil de sécurité. Ainsi, le gaz et/l'eau de chauffage peuvent être évacués hors de la cavité de réception 54. Selon un mode de réalisation préférée, l'orifice de sécurité est formé dans la paroi du réservoir 32. Cet orifice de sécurité est fermé par une portion de paroi ou par l'élément de rupture lui-même tant que l'organe de sécurité n'est pas actionné. Lorsque la pression seuil de sécurité est atteinte, l'élément de rupture libère l'orifice de sécurité en se déplaçant ou en déplaçant cette portion de paroi. Le gaz peut ainsi être évacué par l'orifice de sécurité.

En référence à la figure 12, l'élément de rupture peut être un disque formant une portion de paroi du réservoir 32. Le disque est ainsi configuré pour se désolidariser du réservoir 32 lorsque la pression de gaz atteint la pression seuil de sécurité.

De manière alternative, cet élément de rupture peut être un joint, une faiblesse, une fente ou encore une soupape de sécurité à haut débit.

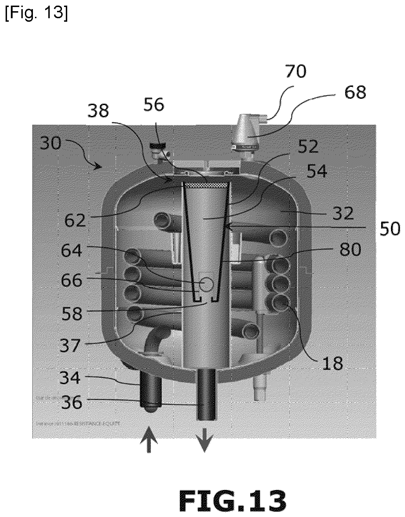

En référence à la figure 13, l'organe de séparation 60 peut comprendre en outre une rampe 80 formant un conduit d'écoulement vers l'orifice de sortie 58. Ce conduit d'écoulement est de préférence de section transversale décroissante depuis l'orifice d'entrée 56 vers l'orifice de sortie 58. Cette rampe permet de favoriser la séparation de phases du fluide, i.e. la séparation du fluide frigorigène de l'eau de chauffage. Cette rampe permet en effet d'engendrer un brassage du fluide entrainant la libération des bulles de gaz. La rampe est par exemple de forme tronconique. Selon un mode de réalisation préféré, la rampe 80 est formé par une paroi du corps 52. De manière alternative, la rampe peut être un élément rapporté à l'intérieur du corps 52.

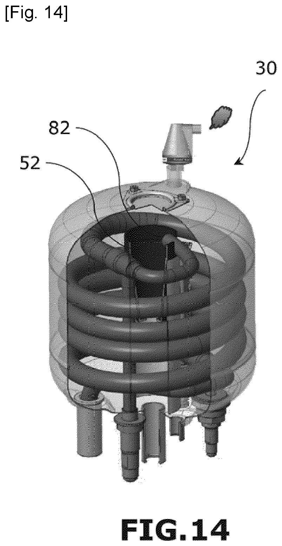

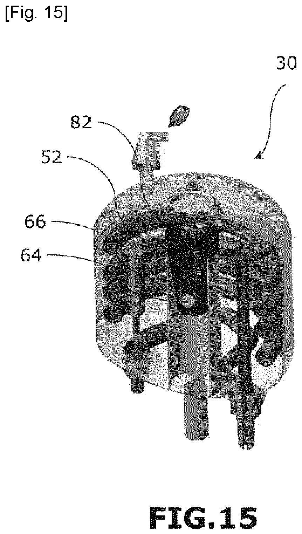

En référence aux figures 14 et 15, l'écoulement du fluide en entrée du corps 52 peut être réalisé pour générer un écoulement cyclonique du fluide à l'intérieur de la cavité de réception 54. Pour cela, l'extrémité de sortie 82 du condenseur 18 est orienté tangentiellement à une paroi de la cavité de réception 54 de manière à projeter le fluide le long de cette paroi. La portion du premier conduit 40 formant l'extrémité de sortie 82 n'est ainsi pas alignée avec l'axe d'écoulement B.

En référence à la figure 16, le dispositif séparateur de sécurité 50 peut être de la forme d'un accessoire additionnel à connecter à une installation de transfert d'énergie. Dans ce cas, le corps 52 forme une enveloppe ou un boîtier externe du dispositif séparateur de sécurité 50.

Le corps 52 comprend deux connexions 84 formant respectivement les orifices d'entrée 56 et de sortie 58 de la cavité de réception 54. Chaque connexion est configurée pour être connectée ou raccordée à une conduite de l'installation de transfert d'énergie. Ainsi, les orifices d'entrée 56 et de sortie 58 peuvent être raccordés à une source d'alimentation en fluide et à un circuit d'eau de chauffage de ladite installation de transfert d'énergie, respectivement. Les orifices d'entrée 56 et de sortie 58 peuvent directement former des raccords ou comporter un raccord communiquant avec ces orifices d'entrée 56 et de sortie 58, tel qu'illustré en figure 16.

Le dispositif séparateur de sécurité 50 sous forme d'un accessoire additionnel est ainsi très flexible quant à son installation car il suffit de retirer un tronçon de conduite ou de l'insérer entre deux raccords du circuit d'eau de chauffage pour l'intégrer à une installation. Ainsi, cet accessoire additionnel peut être installé sur une installation de transfert d'énergie existante. L'accessoire additionnel est de préférence à installer en aval du condenseur 18 dans le sens d'écoulement de l'eau de chauffage de manière à recueillir le gaz avant sa diffusion aux organes émetteurs de chaleur 19. Il est préférable également d'installer un clapet anti-retour 86 dans le circuit d'eau de chauffage, en amont du condenseur 18, pour éviter une sortie de gaz par l'entrée de fluide 34 du module hydraulique 30.

Le dispositif séparateur de sécurité 50 sous la forme d'un accessoire additionnel peut comprendre l'ensemble des fonctionnalités et organes décrits ci-avant en lien avec un mode de réalisation de ce dispositif séparateur de sécurité 50 intégré à un module hydraulique 30.

## Revendications

1. Module hydraulique (30) pour une installation de production d'énergie calorifique, comprenant un réservoir (32) de liquide et un dispositif séparateur de sécurité (50), le module hydraulique (30) comprenant une entrée de fluide (34) et une sortie de fluide (36), ledit dispositif séparateur de sécurité (50) comprenant :
- un corps (52) définissant une cavité de réception (54) d'un fluide comprenant un gaz et un liquide mélangés ensemble, le corps comprenant un orifice d'entrée (56) pour l'alimentation en fluide de la cavité de réception (54) et un orifice de sortie (58) pour l'évacuation du fluide de la cavité de réception (54),
- un organe de séparation (60) disposé dans la cavité de réception et configuré pour séparer le gaz et le liquide admis à l'intérieur de la cavité de réception,
- un clapet flotteur (64) disposé dans la cavité de réception (54) et configuré pour être déplacé entre :
* une position d'ouverture de l'orifice de sortie (58) sous l'action du liquide présent dans la cavité de réception (54) pour permettre un écoulement du liquide depuis l'orifice d'entrée (56) au travers de l'orifice de sortie (58), et
* une position de fermeture de l'orifice de sortie (58) lorsque la pression du gaz à l'intérieur de la cavité de réception (54) ou la gravité exercent sur le clapet flotteur (64) un effort supérieur à l'action du liquide sur le clapet flotteur (64),
dans lequel le dispositif séparateur de sécurité (50) est disposé à l'intérieur du réservoir (32), au niveau d'une conduite de refoulement (37) de liquide du réservoir (32), ladite conduite de refoulement (37) débouchant à l'intérieur du réservoir (32) au niveau d'un orifice d'aspiration (38) disposé au niveau de la partie supérieure (33) du réservoir, le dispositif séparateur de sécurité (50) étant disposé à l'intérieur de la conduite de refoulement (37), le module hydraulique (30) comprenant en outre un organe de régulation (68) en communication de fluide avec la cavité de réception (54) pour permettre l'évacuation du gaz hors de la cavité de réception (54) lorsque le volume de gaz à l'intérieur de la cavité de réception atteint un volume seuil d'évacuation.

2. Module hydraulique (30) selon la revendication 1, comprenant en outre un organe de sécurité (78) en communication de fluide avec la cavité de réception pour permettre l'évacuation du gaz ou du liquide hors de la cavité de réception lorsque la pression de gaz à l'intérieur de la cavité de réception atteint une pression seuil de sécurité, le dispositif de sécurité (78) étant distinct de l'organe de régulation (68).

3. Module hydraulique (30) selon la revendication 2, dans lequel l'organe de sécurité (78) comprend un élément de rupture configuré pour se rompre lorsque la pression à l'intérieur de la cavité de réception atteint le seuil de sécurité de manière à permettre l'évacuation du gaz ou du liquide hors de la cavité de réception.

4. Module hydraulique (30) selon la revendication 2 ou 3, dans lequel l'organe de régulation (68) est en outre configuré pour permettre l'évacuation du gaz hors de la cavité de réception lorsque la pression de gaz à l'intérieur de la cavité de réception est supérieure à une pression seuil de régulation, la pression seuil de régulation étant inférieure à la pression seuil de sécurité.

5. Module hydraulique (30) selon l'une quelconque des revendications précédentes, dans lequel la cavité de réception (54) s'étend le long d'un axe d'écoulement (B) du fluide destiné à être orienté le long d'un axe vertical lorsque le dispositif séparateur de sécurité (50) est en position de fonctionnement, l'orifice de sortie (58) de la cavité de réception (54) étant orienté le long de cet axe d'écoulement (B).

6. Module hydraulique (30) selon l'une quelconque des revendications précédentes, comprenant en outre un guide de retenue (66) du clapet flotteur (64), le guide de retenue (66) étant disposé au niveau de l'orifice de sortie (58) et configuré pour guider le clapet flotteur (64) entre les positions d'ouverture et de fermeture de l'orifice de sortie (58).

7. Module hydraulique (30) selon l'une quelconque des revendications précédentes, dans lequel l'organe de séparation (60) comprend une grille (62) disposée entre les orifices d'entrée (56) et de sortie (58) de la cavité de réception et configurée pour agiter le fluide s'écoulant à l'intérieur de la cavité de réception pour en améliorer le dégazage.

8. Module hydraulique (30) selon l'une quelconque des revendications précédentes, dans lequel l'organe de séparation (60) comprend une rampe (80) formant un conduit d'écoulement de section transversale décroissante depuis l'orifice d'entrée (56) vers l'orifice de sortie (58).

9. Module hydraulique (30) selon l'une quelconque des revendications précédentes, dans lequel l'orifice d'entrée (56) est configuré pour permettre l'alimentation en fluide de la cavité de réception (54) par déversement.

10. Module hydraulique (30) selon l'une quelconque des revendications précédentes, dans lequel l'orifice d'entrée (56) est orienté tangentiellement à une paroi de la cavité de réception de manière à projeter le fluide le long de cette paroi de la cavité de réception pour générer un écoulement cyclonique du fluide à l'intérieur de la cavité de réception.

11. Module hydraulique (30) selon l'une quelconque des revendications précédentes, formant un accessoire additionnel à connecter à une installation de transfert d'énergie et dans lequel le corps (52) forme un une enveloppe extérieure du dispositif séparateur de sécurité, le corps comprenant deux connexions (84) formant respectivement les orifices d'entrée et de sortie de la cavité de réception, chaque connexion (84) étant configurée pour être connectée à une conduite de l'installation de transfert d'énergie pour raccorder les orifices d'entrée et de sortie à une source d'alimentation en fluide et à un circuit récepteur de liquide de ladite installation de transfert d'énergie, respectivement.

12. Module hydraulique selon l'une quelconque des revendication précédentes, comprenant en outre un échangeur de chaleur (18) disposé à l'intérieur du réservoir (32).

13. Module hydraulique selon la revendication 12, dans lequel la conduite de refoulement (37) s'étend au niveau d'une zone centrale du réservoir, l'échangeur de chaleur (18) s'étendant autour de la conduite de refoulement (37).

## Patentansprüche

1. Hydraulikmodul (30) für eine Anlage zur Erzeugung von Wärmeenergie, die einen Flüssigkeitsbehälter (32) und eine Sicherheitstrennvorrichtung (50) aufweist, wobei das Hydraulikmodul (30) einen Fluideinlass (34) und einen Fluidauslass (36) aufweist, wobei die Sicherheitstrennvorrichtung (50) Folgendes aufweist:
- einen Körper (52), der einen Hohlraum (54) zur Aufnahme eines Fluids definiert, das ein Gas und eine Flüssigkeit aufweist, die miteinander vermischt sind, wobei der Körper eine Einlassöffnung (56) zur Zufuhr des Fluids in den Aufnahmehohlraum (54) und eine Auslassöffnung (58) zum Ablassen des Fluids aus dem Aufnahmehohlraum (54) aufweist,
- ein Trennorgan (60), das in dem Aufnahmehohlraum angeordnet und so konfiguriert ist, dass es das Gas und die Flüssigkeit, die in den Aufnahmehohlraum gelangt sind, voneinander trennt,
- ein Schwimmerventil (64), das in dem Aufnahmehohlraum (54) angeordnet und so konfiguriert ist, dass es umschaltet zwischen:
* einer Position, in der die Auslassöffnung (58) unter der Wirkung der in dem Aufnahmehohlraum (54) vorhandenen Flüssigkeit geöffnet wird, um einen Flüssigkeitsstrom von der Einlassöffnung (56) durch die Auslassöffnung (58) zu ermöglichen, und
* einer Position, in der die Auslassöffnung (58) geschlossen ist, wenn der Gasdruck im Inneren des Aufnahmehohlraums (54) oder die Schwerkraft eine Kraft auf das Schwimmerventil (64) ausübt, die größer ist als die Wirkung der Flüssigkeit auf das Schwimmerventil (64),
wobei die Sicherheitstrennvorrichtung (50) im Inneren des Behälters (32) auf der Höhe einer Druckleitung (37) für Flüssigkeit aus dem Behälter (32) angeordnet ist, wobei die Druckleitung (37) im Inneren des Behälters (32) auf der Höhe einer Ansaugöffnung (38) mündet, die auf der Höhe des oberen Teils (33) des Behälters angeordnet ist, wobei die Sicherheitstrennvorrichtung (50) im Inneren der Druckleitung (37) angeordnet ist, wobei das Hydraulikmodul (30) darüber hinaus ein Regelorgan (68) aufweist, das in Fluidverbindung mit dem Aufnahmehohlraum (54) steht, um die Ableitung des Gases aus dem Aufnahmehohlraum (54) zu ermöglichen, wenn das Gasvolumen im Inneren des Aufnahmehohlraums ein Ableitungsschwellenvolumen erreicht.

2. Hydraulikmodul (30) nach Anspruch 1, das darüber hinaus ein Sicherheitsorgan (78) aufweist, das in Fluidverbindung mit dem Aufnahmehohlraum steht, um die Ableitung des Gases oder der Flüssigkeit aus dem Aufnahmehohlraum zu ermöglichen, wenn der Gasdruck im Inneren des Aufnahmehohlraums einen Sicherheitsschwellendruck erreicht, wobei das Sicherheitsorgan (78) von dem Regelorgan (68) getrennt ist.

3. Hydraulikmodul (30) nach Anspruch 2, wobei das Sicherheitsorgan (78) ein Bruchelement aufweist, das so konfiguriert ist, dass es bricht, wenn der Druck innerhalb des Aufnahmehohlraums den Sicherheitsschwellenwert erreicht, so dass das Gas oder die Flüssigkeit aus dem Aufnahmehohlraum abgeleitet werden kann.

4. Hydraulikmodul (30) nach Anspruch 2 oder 3, wobei das Regelorgan (68) außerdem so konfiguriert ist, dass es die Ableitung des Gases aus dem Aufnahmehohlraum ermöglicht, wenn der Gasdruck im Inneren des Aufnahmehohlraums höher ist als ein Regelschwellendruck, wobei der Regelschwellendruck niedriger ist als der Sicherheitsschwellendruck.

5. Hydraulikmodul (30) nach einem der vorhergehenden Ansprüche, wobei sich der Aufnahmehohlraum (54) entlang einer Strömungsachse (B) des Fluids erstreckt, das dazu bestimmt ist, entlang einer vertikalen Achse ausgerichtet zu werden, wenn sich die Sicherheitstrennvorrichtung (50) in der Betriebsposition befindet, wobei die Auslassöffnung (58) des Aufnahmehohlraums (54) entlang dieser Strömungsachse (B) ausgerichtet ist.

6. Hydraulikmodul (30) nach einem der vorhergehenden Ansprüche, das darüber hinaus eine Halteführung (66) für das Schwimmerventil (64) aufweist, wobei die Halteführung (66) an der Auslassöffnung (58) angeordnet und so konfiguriert ist, dass sie das Schwimmerventil (64) zwischen der offenen und der geschlossenen Position der Auslassöffnung (58) führt.

7. Hydraulikmodul (30) nach einem der vorhergehenden Ansprüche, wobei das Trennorgan (60) ein Gitter (62) aufweist, das zwischen der Einlass- (56) und der Auslassöffnung (58) des Aufnahmehohlraums angeordnet und so konfiguriert ist, dass es das im Inneren des Aufnahmehohlraums strömende Fluid bewegt, um dessen Entgasung zu verbessern.

8. Hydraulikmodul (30) nach einem der vorhergehenden Ansprüche, wobei das Trennorgan (60) eine Rampe (80) aufweist, die einen Strömungskanal mit abnehmendem Querschnitt von der Einlassöffnung (56) zur Auslassöffnung (58) bildet.

9. Hydraulikmodul (30) nach einem der vorhergehenden Ansprüche, wobei die Einlassöffnung (56) so konfiguriert ist, dass sie die Zufuhr von Fluid in den Aufnahmehohlraum (54) durch Einleitung ermöglicht.

10. Hydraulikmodul (30) nach einem der vorhergehenden Ansprüche, wobei die Einlassöffnung (56) tangential zu einer Wand des Aufnahmehohlraums so ausgerichtet ist, dass das Fluid entlang dieser Wand des Aufnahmehohlraums gespritzt wird, um eine Zyklonströmung des Fluids im Inneren des Aufnahmehohlraums zu erzeugen.

11. Hydraulikmodul (30) nach einem der vorhergehenden Ansprüche, das ein zusätzliches Zubehör bildet, das mit einer Energieübertragungsanlage zu verbinden ist, und bei dem der Körper (52) eine Außenhülle der Sicherheitstrennvorrichtung bildet, wobei der Körper zwei Anschlüsse (84) aufweist, die jeweils die Einlass- und die Auslassöffnung des Aufnahmehohlraums bilden, wobei jede Verbindung (84) so konfiguriert ist, dass sie mit einer Leitung der Energieübertragungsanlage verbunden werden kann, um die Einlass- und die Auslassöffnung mit einer Fluidversorgungsquelle bzw. einem Flüssigkeitsaufnahmekreis der Energieübertragungsanlage zu verbinden.

12. Hydraulikmodul nach einem der vorhergehenden Ansprüche, das darüber hinaus einen Wärmetauscher (18) aufweist, der im Inneren des Behälters (32) angeordnet ist.

13. Hydraulikmodul nach Anspruch 12, wobei sich die Druckleitung (37) an einem zentralen Bereich des Behälters erstreckt und sich der Wärmetauscher (18) um die Druckleitung (37) herum erstreckt.

## Claims

1. Hydraulic module (30) for a heat energy generation installation, comprising a liquid tank (32) and a safety separator device (50), the hydraulic module (30) comprising a fluid inlet (34) and a fluid outlet (36), said safety separator device (50) comprising:
- a body (52) defining a receiving cavity (54) for a fluid comprising a gas and a liquid mixed together, the body comprising an inlet orifice (56) for supplying fluid to the receiving cavity (54) and an outlet orifice (58) for discharging the fluid from the receiving cavity (54),
- a separation member (60) placed in the receiving cavity and designed to separate the gas and the liquid admitted into the receiving cavity,
- a float valve (64) placed in the receiving cavity (54) and designed to be moved between:
* a position in which the outlet orifice (58) is open under the action of the liquid present in the receiving cavity (54) to enable the liquid to flow from the inlet orifice (56) through the outlet orifice (58), and
* a position in which the outlet orifice (58) is closed if the pressure of the gas inside the receiving cavity (54) or gravity exerts a force on the float valve (64) that is greater than the action of the liquid on the float valve (64),
wherein the safety separator device (50) is placed inside the tank (32), in a liquid discharge line (37) of the tank (32), said discharge line (37) opening into the inside of the tank (32) at an aspiration orifice (38) positioned in the top (33) of the tank, the safety separator device (50) being placed inside the discharge line (37), the hydraulic module (30) further comprising a regulating member (68) in fluidic communication with the receiving cavity (54) to enable the gas to be discharged from the receiving cavity (54) if the volume of gas inside the receiving cavity reaches a threshold discharge volume.

2. Hydraulic module (30) according to Claim 1, further comprising a safety member (78) in fluidic communication with the receiving cavity to enable the gas or the liquid to be discharged from the receiving cavity if the gas pressure inside the receiving cavity reaches a threshold safety pressure, the safety device (78) being separate from the regulating member (68).

3. Hydraulic module (30) according to Claim 2, wherein the safety member (78) comprises a rupture element designed to break if the pressure inside the receiving cavity reaches the safety threshold to enable the gas or the liquid to be discharged from the receiving cavity.

4. Hydraulic module (30) according to Claim 2 or 3, wherein the regulating member (68) is also designed to enable the gas to be discharged from the receiving cavity if the gas pressure inside the receiving cavity is greater than a threshold regulation pressure, the threshold regulation pressure being less than the threshold safety pressure.

5. Hydraulic module (30) according to any one of the preceding claims, wherein the receiving cavity (54) extends along a flow axis (B) of the fluid intended to be oriented along a vertical axis when the safety separator device (50) is in the operating position, the outlet orifice (58) of the receiving cavity (54) being oriented along this flow axis (B).

6. Hydraulic module (30) according to any one of the preceding claims, further comprising a retaining guide (66) for the float valve (64), the retaining guide (66) being positioned at the outlet orifice (58) and designed to guide the float valve (64) between the open and closed positions of the outlet orifice (58).

7. Hydraulic module (30) according to any one of the preceding claims, wherein the separation member (60) comprises a grille (62) arranged between the inlet orifice (56) and the outlet orifice (58) of the receiving cavity and designed to disturb the fluid flowing inside the receiving cavity to enhance the degassing thereof.

8. Hydraulic module (30) according to any one of the preceding claims, wherein the separation member (60) comprises a ramp (80) forming a flow line with a decreasing cross section from the inlet orifice (56) to the outlet orifice (58).

9. Hydraulic module (30) according to any one of the preceding claims, wherein the inlet orifice (56) is designed to enable fluid to be supplied to the receiving cavity (54) by overflowing.

10. Hydraulic module (30) according to any one of the preceding claims, wherein the inlet orifice (56) is oriented tangentially to a wall of the receiving cavity so as to project the fluid along this wall of the receiving cavity to generate a cyclonic flow of the fluid inside the receiving cavity.

11. Hydraulic module (30) according to any one of the preceding claims, forming an additional accessory to be connected to an energy transfer installation and wherein the body (52) forms an outer envelope of the safety separator device, the body comprising two connections (84) forming respectively the inlet and outlet orifices of the receiving cavity, each connection (84) being designed to be connected to a line of the energy transfer installation to connect the inlet and outlet orifices to a fluid supply source and to a liquid receiving circuit of said energy transfer installation, respectively.

12. Hydraulic module according to any one of the preceding claims, further comprising a heat exchanger (18) placed inside the tank (32).

13. Hydraulic module according to Claim 12, wherein the discharge line (37) extends in a central zone of the tank, the heat exchanger (18) extending about the discharge line (37).
